# FASCICULE DE BREVET EUROPEEN

(11) **EP 3 995 358 B1**
(45) Date de publication et mention de la délivrance du brevet: **10.05.2023**
(21) Numéro de dépôt: 21206132.9
(22) Date de dépôt: 03.11.2021
(51) Int. Cl.: B60N 2/60, B60N 2/66, B61D 33/00, B60N 2/879, B60N 2/75, B64D 11/06, B61C 3/00, B60N 2/90

(54) **HOUSSE POUR SIÈGE, SIÈGE ASSOCIÉ ET VÉHICULE COMPORTANT UN TEL SIÈGE**
HÜLLE FÜR SITZ, ENTSPRECHENDER SITZ UND FAHRZEUG, DAS EINEN SOLCHEN SITZ UMFASST
COVER FOR SEAT, ASSOCIATED SEAT AND VEHICLE COMPRISING SUCH A SEAT

(30) Priorité: 04.11.2020 FR 2011307
(43) Date de publication de la demande: 11.05.2022
(73) Titulaire: ALSTOM Transport Technologies, 93400 Saint-Ouen (FR)
(72) Inventeur: SCHRADER, Sarah, 75019 Paris (FR); MILENOVICH, Sophie, 93450 L'Ile-Saint-Denis (FR); VERGNAUD, Loïc, 75018 Paris (FR); DE-COLOMBEL, Bertrand, 75020 Paris (FR); DREUX, Raoul, 72330 Yvre-le-Pôlin (FR)
(74) Mandataire: Lavoix

(56) Documents cités:
- DE-U1- 20 317 794
- DE-U1- 29 902 113
- US-A1- 2012 193 958
- US-B1- 10 479 506
- US-B2- 10 723 461

## Description

La présente invention concerne une housse pour un siège. La présente invention concerne également un siège comportant une telle housse et un véhicule comportant un tel siège.

Dans de nombreux contextes, un grand nombre de sièges sont disposés près les uns des autres, par exemple dans les trains ou les bus, ou encore dans les salles de spectacles ou de conférences. De manière générale, ces sièges sont identiques les uns aux autres, ou présentent un nombre restreint de types différents, afin de faciliter la gestion des sièges par l'exploitant de la salle ou du système de transport.

Les sièges sont alors conçus de manière à présenter un niveau de confort acceptable pour les usagers prévus, et présentent des fonctions choisies pour répondre aux besoins de la majorité des usagers sans augmenter le prix des sièges par l'ajout de fonctions qui ne seraient utiles que pour une minorité d'usagers.

Afin d'assurer une bonne rentabilité pour l'exploitant, les sièges sont en général disposés à une distance les uns des autres telle que l'intimité des occupants des sièges n'est pas préservée si des personnes occupent les sièges voisins. En outre, la faible distance entre les personnes peut faciliter la transmission de maladies entre leurs occupants. US 10723461 et US2012193958 présentent des modèles de siège avec écran.

Un critère important à prendre en compte est, en outre, de permettre une circulation aisée des usagers entre ou à côté des sièges, ce qui limite la possibilité d'équiper les sièges de moyens, tels que des écrans, augmentant le niveau d'intimité perçue, puisqu'il n'est pas souhaitable de multiplier des obstacles qui empêcheraient un usager du siège de le quitter rapidement en cas de besoin tel qu'un accident ou un incendie.

Dans d'autres cas, un unique siège ou un faible nombre de sièges sont disposés dans un espace de faibles dimensions, tel qu'une voiture, ce qui fait que la présence d'un écran pourrait entraver l'entrée ou la sortie des usagers.

Ces facteurs font que les usagers assis sur les sièges peuvent se sentir vulnérables et exposés, ce qui limite le confort perçu par ces usagers.

Il existe donc un besoin pour un système qui permette d'augmenter le confort perçu en termes d'intimité par les usagers de sièges sans complexifier la structure du siège ni obstruer le passage pour les usagers.

A cet effet, il est proposé une housse destinée à recouvrir un siège, notamment un siège d'un véhicule de transport en commun, de manière amovible, comportant au moins un premier élément de housse et un écran repliable, le premier élément de housse comportant une face d'appui prévue pour qu'un usager appuie sa tête contre la face d'appui lorsque l'usager est assis sur le siège, l'écran comportant un ensemble de panneaux et présentant une configuration dépliée et une configuration repliée, les panneaux étant empilés les uns contre les autres le long d'une direction d'empilement lorsque l'écran est dans la configuration repliée, l'écran s'étendant vers l'avant du siège à partir d'une extrémité transversale de la face d'appui lorsque l'écran est dans la configuration dépliée.

Selon des modes de réalisation avantageux mais non obligatoires, la housse présente une ou plusieurs des caractéristiques suivantes, prise(s) isolément ou selon toutes les combinaisons techniquement possibles :
- l'écran est configuré pour être replié en éventail depuis la configuration dépliée jusqu'à la configuration repliée.
- l'écran présente une extrémité inférieure lorsque l'écran est dans la configuration dépliée, la housse comportant des moyens de traction configurés pour exercer sur l'extrémité inférieure une force tendant à tirer l'extrémité inférieure vers le bas.
- les moyens de traction comportent une lanière présentant une première extrémité fixée à l'extrémité inférieure et une deuxième extrémité configurée pour être fixée à un accoudoir du siège.
- la housse comporte un deuxième élément de housse configuré pour être interposé entre un dossier du siège et le dos de l'usager lorsque l'usager est assis sur le siège, les moyens de traction étant configurés pour fixer l'extrémité inférieure au deuxième élément de housse.
- la housse comporte un troisième élément de housse configuré pour être interposé entre un dossier du siège et le dos de l'usager lorsque l'usager est assis sur le siège, le troisième élément de housse comportant au moins un premier coussin prévu pour former un support lombaire pour l'usager.
- la housse comporte un deuxième coussin prévu pour former un support lombaire pour l'usager, le deuxième coussin étant mobile entre une première position dans laquelle le deuxième coussin est interposé entre le dossier et le dos de l'usager, le premier coussin et le deuxième coussin étant superposés selon une direction verticale, et une deuxième position dans laquelle le deuxième coussin est interposé entre le premier coussin et le dos de l'usager.

Il est également proposé un siège équipé d'une housse telle que précédemment décrite, ainsi qu'un véhicule, notamment un véhicule de transport en commun, comportant un tel siège.

Des caractéristiques et avantages de l'invention apparaîtront à la lecture de la description qui va suivre, donnée uniquement à titre d'exemple non limitatif, et faite en référence aux dessins annexés, sur lesquels :
- La figure 1 est une vue en perspective de deux sièges équipés chacun d'une housse selon l'invention, et
- La figure 2 est un patron des différentes pièces composant la housse de la figure 1.

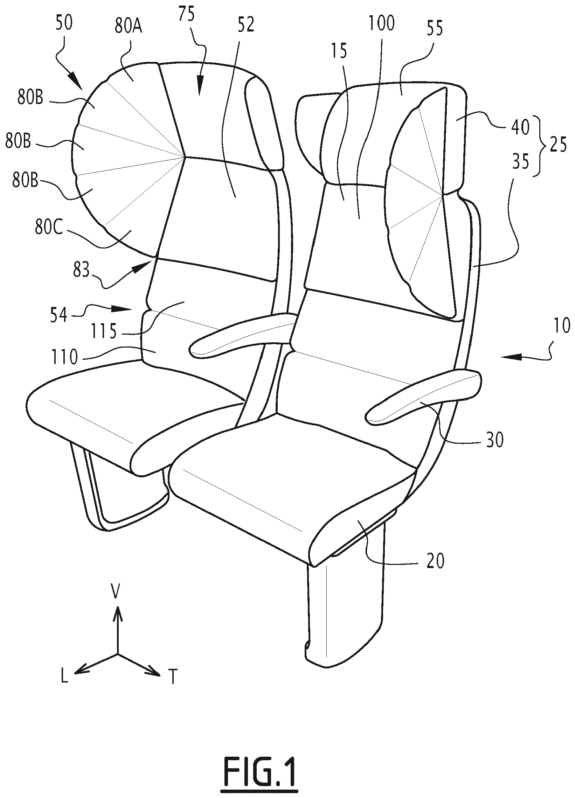

Deux sièges 10 équipés chacun d'une housse 15 sont représenté sur la figure 1. Les deux sièges 10 sont, notamment, disposés côte-à-côte et font face dans la même direction.

Chaque siège 10 est configuré pour permettre à un usager de s'asseoir sur le siège 10. Par exemple, le siège 10 est propre à fournir un confort acceptable aux usagers même lorsqu'aucune housse 15 ne recouvre le siège 10.

Il est défini une direction longitudinale L, une direction verticale V et une direction transversale T pour chaque siège 10.

Il est défini un avant et un arrière pour la direction longitudinale L. L'usager assis sur le siège 10 fait face à l'avant du siège 10.

La direction longitudinale L est, par exemple, une direction horizontale.

La direction transversale T est une direction horizontale.

La direction transversale T est perpendiculaire à la direction longitudinale L.

La direction transversale T est, par exemple, la direction selon laquelle les épaules de l'usager assis sur le siège 10 et faisant face à l'avant s'étendent.

Chaque siège 10 est, par exemple, un siège d'un véhicule tel qu'un véhicule de transport en commun, notamment d'un train, d'un bus, d'un métro ou d'un tramway. En variante, chaque siège 10 est un siège d'un bâtiment tel qu'une salle de spectacle, de cinéma ou de conférence.

Chaque siège 10 comporte une assise 20, un dossier 25, et, par exemple, au moins un accoudoir 30.

L'assise 20 s'étend vers l'avant à partir du dossier 25.

L'assise 20 est configurée pour supporter un usager assis sur le siège 10. Par exemple, l'assise 20 comporte un coussin sur sa face supérieure.

Le dossier 25 est configuré pour permettre à un usager assis sur le siège 10 d'appuyer son dos et sa tête contre le dossier. Lorsque l'usager est assis sur le siège 10, le dossier 25 est disposé à l'arrière de l'usager.

Le dossier 25 comporte, par exemple, une portion principale 35 prévue pour que l'usager appuie son dos contre la portion principale 35, et un appuie-tête 40 s'étendant verticalement vers le haut à partir d'une extrémité supérieure de la portion principale 35.

Le dossier 25 s'étend à partir de l'assise 20 selon une direction d'extension du dossier 25.

La portion principale 35 et l'appuie-tête 40 comportent, notamment, chacun un coussin sur leur face avant respective, ainsi qu'un support ou une coque propre à soutenir le coussin et à apporter une rigidité mécanique à la portion principale 35 ou à l'appuie-tête 40.

Le ou chaque accoudoir 30 s'étend vers l'avant à partir du dossier 25.

Chaque accoudoir 30 est, par exemple, relié au dossier 25 par une liaison pivot configurée pour permettre à l'accoudoir 30 de pivoter entre une configuration abaissée dans laquelle l'accoudoir 30 est sensiblement horizontal et s'étend vers l'avant et une configuration relevée dans laquelle l'accoudoir 30 est sensiblement vertical.

Chaque housse 15 recouvre au moins partiellement le siège 10 correspondant.

En particulier, la housse 15 recouvre de manière amovible le siège 10. Par exemple, la housse 15 est prévue pour être mise en place et enlevée du siège 10 de manière simple et rapide.

La housse 15 comporte au moins un premier élément de housse 45 et un écran 50. De manière optionnelle, la housse 15 comporte, en outre, un deuxième élément de housse 52 et un troisième élément de housse 54.

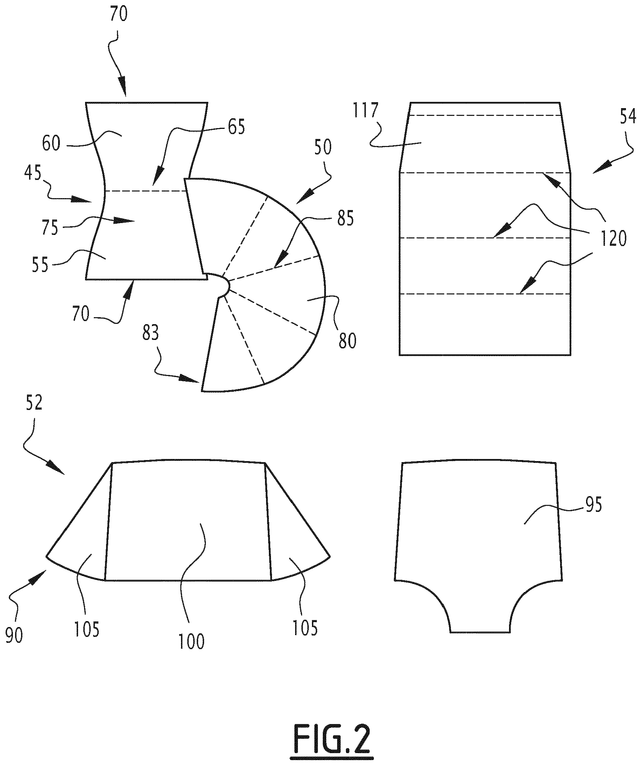

Les différentes parties de la housse 15 sont notamment représentées sur la figure 2, qui présente un patron de la housse 15.

Le premier élément de housse 45 est configuré pour recouvrir au moins partiellement une partie supérieure du dossier 25, notamment l'appuie-tête 40.

Le premier élément de housse 45 comporte, par exemple, une première portion 55 et une deuxième portion 60, ces deux portions 55, 60 étant reliées l'une à l'autre et étant configurées pour être repliées l'une contre l'autre le long d'une ligne de pliage 65.

La première portion 55 et la deuxième portion 60 sont, par exemple, venues de matière l'une avec l'autre, étant notamment formées par une même pièce de tissu.

Chacune de la première portion 55 et la deuxième portion 60 présente une extrémité 70 du premier élément de housse 45, la ligne de pliage 65 étant interposée entre les deux extrémités 70 lorsque le premier élément de housse 45 est déplié.

Chaque extrémité 70 est, par exemple, rectiligne et délimitée selon une direction parallèle à la ligne de pliage 65 par deux coins.

Lorsque la housse 15 recouvre le siège 10, une portion du dossier 25, notamment l'appuie-tête 40, est par exemple enserrée entre la première portion 55 et la deuxième portion 60. Dans l'exemple représenté sur les figures, la ligne de pliage 65 est une ligne horizontale lorsque la housse 15 recouvre le siège 10.

Le premier élément de housse 45 comporte, en outre, des moyens de fixation de la première portion 55à la deuxième portion 60. Les moyens de fixation sont, notamment, configurés pour exercer, lorsque le premier élément de housse 45 recouvre l'appuie-tête 40, une force tendant à rapprocher la première portion 55 de la deuxième portion 60, de manière à maintenir l'appuie-tête 40 enserré entre les deux portions 55, 60 du premier élément de housse.

Les moyens de fixation sont, par exemple, prévus pour fixer l'une à l'autre les deux extrémités 70 du premier élément de housse 45, notamment pour fixer deux à deux des coins des deux extrémités 70.

Les moyens de fixation comprennent, par exemple, une lanière fixée à un coin de l'une des extrémités 70 et coopérant avec une boucle fixée à un coin de l'autre extrémité 70, ou encore des boutons-pression fixés chacun à un coin et coopérant deux à deux.

La première portion 55 est prévue pour être interposée entre la tête de l'usager et l'appuie-tête 40 lorsque la housse 15 recouvre le siège 10 et l'usager est assis sur le siège 10. En particulier, l'une des faces de la première portion 55, appelée « face d'appui » 75, est configurée pour que l'usager appuie sa tête contre la face d'appui 75 lorsqu'il est assis sur le siège 10.

L'écran 50 est fixé au premier élément de housse 45, notamment à la première portion 55. En particulier, l'écran 50 est fixé, notamment cousu, à la face d'appui 75.

L'écran 50 est, notamment, fixé à une extrémité transversale du premier élément de housse 45, en particulier de la face d'appui 75.

Selon une variante, la housse 15 comporte deux écrans 50 fixés chacun à une extrémité transversale de la face d'appui 75 et entre lesquels la tête de l'usager est interposée lorsque l'usager appuie sa tête contre l'appuie-tête 40.

L'écran 50 comporte un ensemble de panneaux 80A, 80B, 80C, par exemple entre deux et dix panneaux 80A, 80B, 80C, notamment entre quatre et six panneaux 80A, 80B, 80C. Sur les figures, un exemple d'écran 50 à cinq panneaux 80A, 80B, 80C est représenté, toutefois le nombre de panneaux 80A, 80B, 80C est susceptible de varier.

L'écran 50 est, par exemple, fabriqué dans une pièce de tissu ou plusieurs pièces de tissu superposées. En particulier, l'écran 50 est formé par deux pièces de tissu superposées et fixées l'une à l'autre, entre lesquelles un matériau de rembourrage tel que de la feutrine est enserré.

L'écran 50 est dépliable. En d'autres termes, l'écran 50 présente une configuration repliée et une configuration dépliée, l'écran 50 passant de la position dépliée à la position repliée par pliage, c'est-à-dire en rabattant au moins une partie de l'écran 50 sur une autre partie.

En particulier, lorsque l'écran 50 est dans la configuration repliée, les panneaux 80A, 80B, 80C sont empilés les uns contre les autres se long d'une direction d'empilement. La direction d'empilement est, par exemple, la direction transversale T. En variante, la direction d'empilement est par exemple la direction longitudinale L.

Lorsque l'écran 50 est dans la configuration dépliée, l'écran s'étend vers l'avant du siège 10. En particulier, lorsque l'écran 50 est dans la configuration dépliée, l'écran 50 est décalé transversalement par rapport à la tête de l'usager.

Lorsque l'écran 50 est dans la configuration dépliée, l'écran 50 présente une hauteur totale, mesurée selon la direction verticale, comprise, par exemple, entre 40 centimètres (cm) et 70 cm, notamment égale à 60 cm, à 10 pourcents (%) près.

Lorsque l'écran 50 est dans la configuration dépliée, l'écran 50 présente une largeur totale, mesurée selon la direction longitudinale L, comprise, par exemple, entre 25 cm et 50 cm, notamment égale à 33 cm.

Lorsque l'écran 50 est dans la configuration dépliée, l'écran 50 présente une extrémité inférieure 83.

Les panneaux 80A, 80B, 80C sont reliés les uns aux autres. En particulier, chaque panneau 80A, 80B, 80C est relié à au moins un autre panneau délimitant le panneau 80A, 80B, 80C considéré.

L'ensemble de panneaux 80A, 80B, 80C comporte, par exemple, un premier panneau 80A dont une extrémité est fixée au premier élément de housse 35, un ou plusieurs deuxième(s) panneau 80B, notamment trois deuxièmes panneaux 80B et un troisième panneau 80C.

Les deuxièmes panneaux 80B sont successivement interposés entre le premier panneau 80A et le troisième panneau 80C lorsque l'écran 50 est dans la configuration dépliée.

Lorsque l'écran 50 est dans la configuration dépliée, le troisième panneau 80C est, par exemple, en contact avec le dossier 25 ou avec le deuxième élément de housse 55.

L'extrémité inférieure 83 est, notamment, un point du troisième panneau 80C.

Les panneaux 80A, 80B, 80C sont, par exemple, délimités les uns des autres par des coutures 85 de l'écran 50, et configurés pour être empilés les uns contre les autres par pliage le long des coutures 85.

Chaque panneau 80A, 80B, 80C est, par exemple, délimité par deux segments de droite, les segments de droite du panneau 80A, 80B, 80C étant des segments de deux droites concourantes. En particulier, lorsque l'écran 50 est dans la configuration dépliée, les droites correspondant aux segments de droite des différents panneaux 80A, 80B, 80C concourent en un unique point.

Chaque segment de droite est matérialisé par une couture 65 correspondante qui s'étend le long du segment de droite considéré.

Par exemple, chaque panneau 80A, 80B, 80C est en forme de secteur circulaire, de triangle, ou encore de trapèze isocèle. En variante, le panneau 80A, 80B, 80C est délimité par deux cercles concentriques, le centre des cercles étant le point d'intersection des droites, et par les deux segments de droites associés au panneau 80A, 80B, 80C.

L'écran 50 est, notamment, configuré pour être replié en éventail depuis la configuration dépliée jusqu' à la configuration repliée.

Il est en particulier entendu par « en éventail » que chaque panneau 80A, 80B, 80C est replié par rotation dans un sens autour d'un des segments de droite qui délimitent le panneau 80A, 80B, 80C considéré, le panneau 80A, 80B, 80C voisin du panneau considéré étant replié par rotation dans le sens opposé autour d'un des segments de droite correspondants.

De manière connue en soi, les coutures 85 sont configurées pour forcer le pliage des panneaux 80A, 80B, 80C en éventail lorsque l'usager replie l'écran 50.

Selon un mode de réalisation, la housse 15 comporte des moyens de traction configurés pour exercer sur l'extrémité inférieure 83, lorsque l'écran 50 est dans la configuration dépliée, une force tendant à tirer l'extrémité inférieure 83 vers le bas.

Les moyens de traction comportent, par exemple, une lanière fixée à l'extrémité inférieure 83 et prévue pour être fixée à un accoudoir 30 disposé en-dessous de l'écran 50. Par exemple, une extrémité de la lanière est fixée à l'extrémité inférieure 83, l'autre extrémité de la lanière étant fixée à l'accoudoir 30. En particulier, l'autre extrémité comporte une boucle destinée à être enfilée autour de l'accoudoir 30.

Il est entendu par « lanière » tout type de lien souple, chaîne, ficelle, ruban ou assimilé. Chaque lanière est, en particulier, susceptible d'être élastique.

En variante, les moyens de traction sont propres à fixer l'extrémité 83 au deuxième élément de housse 52. Par exemple, les moyens de traction comportent un bouton fixé à l'extrémité 83 et un bouton correspondant monté sur le deuxième élément de housse 52.

Optionnellement, la housse 15 comporte, en outre, des moyens pour maintenir l'écran 50 dans la configuration repliée, par exemple une lanière ou autre lien souple prévue pour enserrer les panneaux 80A, 80B, 80C lorsqu'ils sont empilés les uns contre les autres.

Le deuxième élément de housse 52 est prévu pour recouvrir au moins partiellement le dossier 25, notamment pour recouvrir la portion principale 35 du dossier 25.

Le deuxième élément de housse 52 comporte, par exemple, une portion avant 90 et une portion arrière 95, ces deux portions 90 et 95 étant par exemple formées par deux pièces séparées, mais étant en variante deux portions d'une même pièce.

Chacune de la portion avant 90 et de la portion arrière 95 est, par exemple, fabriquée dans une pièce de tissu ou plusieurs pièces de tissu superposées. En particulier, la portion avant 90 et la portion arrière 95 sont formées chacune par deux pièces de tissu superposées et fixées l'une à l'autre, entre lesquelles un matériau de rembourrage tel que de la feutrine est enserré.

La portion avant 90 est prévue pour être partiellement interposée entre le dos de l'usager et la portion principale 35 du dossier 25.

La portion avant 90 comporte un panneau principal 100 et deux panneaux latéraux 105, qui sont par exemple venus de matière et délimités les uns des autres par des coutures.

Le panneau principal 100 est prévu pour être interposé entre le dos de l'usager et la portion principale 35 du dossier 25.

Le panneau principal 100 présente, par exemple, une largeur (mesurée selon la direction T) comprise entre 40 et 50 cm, et une hauteur comprise entre 30 et 40 cm.

Les panneaux latéraux 105 sont représentés sur la figure 2, mais omis de la figure 1 pour ne pas surcharger celle-ci.

Les panneaux latéraux 105, ensemble, encadrent le panneau principal selon la direction transversale T.

Chaque panneau latéral 105 s'étend selon la direction longitudinale L vers l'avant à partir d'une extrémité transversale du panneau principal 100 lorsque le deuxième élément de housse 52 recouvre le siège 10. Par exemple, les coutures délimitant chaque panneau latéral 105 du panneau principal 100 sont configurées pour orienter les panneaux latéraux 105 vers l'avant.

Chaque panneau latéral 105 est, par exemple, en forme de triangle.

La portion arrière 95 est configurée pour que la portion avant 90 et la portion arrière 95 enserrent la portion principale 35 du dossier selon la direction longitudinale L.

La portion avant 90 et la portion arrière 95 sont, par exemple, configurées pour être fixées l'une à l'autre de manière à enserrer le dossier 25 pour maintenir le deuxième élément de housse 54 en position.

En variante, au moins une portion parmi la portion avant 90 et la portion arrière 95 comporte des moyens pour fixer la portion considérée à la portion principale 35, par exemple un système d'accroche par crochets et boucles textiles coopérant avec un système correspondant du coussin de la portion principale 35.

Selon une autre variante, les panneaux latéraux 105 sont prévus pour être enserrés entre le coussin et le support de la portion principale 35 de manière à maintenir la portion avant 90 en position.

Le troisième élément de housse 54 est, par exemple, disposé verticalement en-dessous du deuxième élément de housse 52, au niveau des lombaires d'un usager assis sur le siège. En particulier, le troisième élément de housse 54 est interposé entre le deuxième élément de housse 52 et l'assise 20.

Le troisième élément de housse 54 est interposé entre le dos de l'usager et le dossier 25, notamment la portion principale 35.

Le troisième élément de housse 54 comporte au moins un premier coussin 110, et, optionnellement, un deuxième coussin 115.

Le premier coussin 110 est propre à former un support lombaire pour l'usager. En particulier, le premier coussin 110 est interposé entre le dos de l'usager et le dossier 25.

Le premier coussin 110 est, par exemple, en contact avec l'assise 20.

Le deuxième coussin 115 est mobile entre une première position et une deuxième position. Le deuxième coussin 115 est représenté dans la première position sur la figure 1.

Lorsque le deuxième coussin 115 est dans la première position, le deuxième coussin 115 est propre à former un support lombaire pour l'usager.

Lorsque le deuxième coussin 115 est dans la première position, le deuxième coussin 115 est interposé entre le dos et l'usager et le dossier 25.

Lorsque le deuxième coussin 115 est dans la première position, le premier coussin 110 et le deuxième coussin 115 sont superposés selon la direction verticale V. En particulier, le premier coussin 110 est interposé selon la direction verticale V entre le deuxième coussin 115 et l'assise 20.

Lorsque le deuxième coussin 115 est dans la deuxième position, le deuxième coussin 115 est interposé entre le dos de l'usager et le premier coussin 110.

Le deuxième coussin 115 est, par exemple, configuré pour pivoter autour d'un axe horizontal entre la première position et la deuxième position.

Le premier coussin 110 et le deuxième coussin 115 sont, par exemple, enveloppés dans une unique pièce de tissu 117 repliée sur elle-même. L'axe est, par exemple, matérialisé par une couture 120 de la pièce de tissu 117, cette couture 120 séparant les coussins 110 et 115 l'un de l'autre.

La pièce 117 est, par exemple, séparée en quatre panneaux par trois coutures 120, ces panneaux étant fixés deux à deux pour former deux poches contenant chacune l'un des coussins 110 et 115.

Il est à noter que les dimensions des différentes parties de la housse 15 sont susceptibles de varier en fonction des dimensions et de la forme du siège 10.

La housse 15 permet d'équiper aisément un siège 10 existant d'un écran 50 améliorant la sensation d'intimité perçue par l'usager. Ainsi, certains des sièges 10 d'une salle ou d'un véhicule peuvent être personnalisés par l'ajout de nouvelles fonctions au gré des usagers, notamment pour limiter les risques de transmission de maladies, puisque l'écran forme une barrière aux germes et virus.

En outre, l'écran 50 dépliable permet, lorsqu'il est replié, de ne pas s'opposer au passage des usagers à proximité des sièges 10, et ainsi de ne pas gêner l'évacuation des usagers en cas de besoin.

Un écran 50 se repliant en éventail occupe particulièrement peu de place et est aisé à déplier et à replier. En outre, les coutures 85 participent à la rigidité de l'écran 50 lorsqu'il est déplié.

Les moyens de traction permettent, par la force exercée sur l'extrémité inférieure 83, de maintenir l'écran 50 en position dans la configuration dépliée, et notamment d'éviter que l'écran 50 ne pivote en s'éloignant de l'usager et ainsi remplisse bien sa fonction d'écrantage de l'usager selon la direction transversale T.

Une lanière reliant l'extrémité 83 à l'accoudoir 30 permet d'exercer une telle force de manière simple. Lorsque les moyens de traction fixent l'extrémité inférieure 83 au deuxième élément de housse 52, la housse est compatible avec un grand nombre de sièges 10, avec ou sans accoudoirs, ou avec des accoudoirs 30 de dimensions variées.

Le premier coussin 110 permet d'améliorer le confort de l'usager.

Le deuxième coussin 115 permet d'optimiser le soutien apporté par le troisième élément de housse à l'usager en fonction de la position de celui-ci, puisque lorsque l'usager se tient droit, le deuxième coussin 115 dans la première position permet de soutenir une plus large portion du dos, tandis qu'un usager affalé dans le siège 10 et dont la partie inférieure du dos est plus éloignée du dossier 25 sera mieux soutenu par le deuxième coussin 115 dans la deuxième position.

## Revendications

1. Housse (15) destinée à recouvrir un siège (10), notamment un siège d'un véhicule de transport en commun, de manière amovible, comportant au moins un premier élément de housse (45) et un écran (50) repliable, le premier élément de housse (45) comportant une face d'appui (75) prévue pour qu'un usager appuie sa tête contre la face d'appui (75) lorsque l'usager est assis sur le siège (10), **caractérisé en ce que** l'écran (50) comporte un ensemble de panneaux (80A, 80B, 80C) et présente une configuration dépliée et une configuration repliée, les panneaux (80A, 80B, 80C) étant empilés les uns contre les autres le long d'une direction d'empilement (T ; L) lorsque l'écran (50) est dans la configuration repliée, l'écran (50) s'étendant vers l'avant du siège (10) à partir d'une extrémité transversale de la face d'appui (75) lorsque l'écran (50) est dans la configuration dépliée.

2. Housse selon la revendication 1, dans laquelle l'écran (50) est configuré pour être replié en éventail depuis la configuration dépliée jusqu'à la configuration repliée.

3. Housse selon la revendication 1 ou 2, dans lequel l'écran (50) présente une extrémité inférieure (83) lorsque l'écran (50) est dans la configuration dépliée, la housse (15) comportant des moyens de traction configurés pour exercer sur l'extrémité inférieure (83) une force tendant à tirer l'extrémité inférieure (83) vers le bas.

4. Housse selon la revendication précédence, dans laquelle les moyens de traction comportent une lanière présentant une première extrémité fixée à l'extrémité inférieure (83) et une deuxième extrémité configurée pour être fixée à un accoudoir (30) du siège (10).

5. Housse selon la revendication 3, comportant un deuxième élément de housse (52) configuré pour être interposé entre un dossier (25) du siège (10) et le dos de l'usager lorsque l'usager est assis sur le siège (10), les moyens de traction étant configurés pour fixer l'extrémité inférieure (83) au deuxième élément de housse (52).

6. Housse selon l'une quelconque des revendications précédentes, comportant un troisième élément de housse (54) configuré pour être interposé entre un dossier (25) du siège (10) et le dos de l'usager lorsque l'usager est assis sur le siège (10), le troisième élément de housse (54) comportant au moins un premier coussin (110) prévu pour former un support lombaire pour l'usager.

7. Housse selon la revendication précédente, comportant un deuxième coussin (115) prévu pour former un support lombaire pour l'usager, le deuxième coussin (115) étant mobile entre une première position dans laquelle le deuxième coussin (115) est interposé entre le dossier (25) et le dos de l'usager, le premier coussin (110) et le deuxième coussin (115) étant superposés selon une direction verticale, et une deuxième position dans laquelle le deuxième coussin (115) est interposé entre le premier coussin (110) et le dos de l'usager.

8. Housse selon l'une quelconque des revendications précédentes, dans laquelle l'écran (50) comporte entre deux et dix panneaux (80A, 80B, 80C), de préférence entre quatre et six panneaux (80A, 80B, 80C).

9. Siège (10), notamment siège pour véhicule, comportant une housse (15) selon l'une quelconque des revendications précédentes.

10. Véhicule, notamment véhicule de transport en commun, comportant un siège (10) selon la revendication précédente.

## Patentansprüche

1. Hülle (15), die dazu bestimmt ist, abnehmbar einen Sitz (10) zu bedecken, insbesondere einen Sitz eines öffentlichen Verkehrsmittels, umfassend mindestens ein erstes Hüllenelement (45) und einen zusammenlegbaren Schirm (50), das erste Hüllenelement (45) umfassend eine Auflagefläche (75), die bereitgestellt ist, damit ein Benutzer seinen Kopf an der Auflagefläche (75) anlegt, wenn der Benutzer auf dem Sitz (10) sitzt, **dadurch gekennzeichnet, dass** der Schirm (50) eine Anordnung von Feldern (80A, 80B, 80C) umfasst und
eine entfaltete Konfiguration und eine
zusammengelegte Konfiguration aufweist, wobei die Felder (80A, 80B, 80C) entlang einer Stapelrichtung (T; L) aneinander gestapelt sind, wenn der Schirm (50) in der zusammengelegten Konfiguration ist, wobei sich der Schirm (50) von einem Querende der Auflagefläche (75) zu der Vorderseite des Sitzes (10) erstreckt, wenn der Schirm (50) in der entfalteten Konfiguration ist.

2. Hülle nach Anspruch 1, wobei der Schirm (50) konfiguriert ist, um von der entfalteten Konfiguration bis zu der zusammengelegten Konfiguration fächerförmig zusammengelegt zu werden.

3. Hülle nach Anspruch 1 oder 2, wobei der Schirm (50) ein unteres Ende (83) aufweist, wenn der Schirm (50) in der entfalteten Konfiguration ist, die Hülle (15) umfassend Zugeinrichtungen, die konfiguriert sind, um eine Kraft auf das untere Ende (83) ausüben, die dazu neigt, das untere Ende (83) nach unten zu ziehen.

4. Hülle nach dem vorherigen Anspruch, wobei die Zugeinrichtungen einen Riemen umfassen, der ein erstes Ende, das an dem unteren Ende (83) befestigt ist, und ein zweites Ende, das konfiguriert ist, um an einer Armlehne (30) des Sitzes (10) befestigt zu werden, aufweist.

5. Hülle nach Anspruch 3, umfassend ein zweites Hüllenelement (52), das konfiguriert ist, um zwischen einer Rückenlehne (25) des Sitzes (10) und dem Rücken des Benutzers eingefügt zu sein, wenn der Benutzer auf dem Sitz (10) sitzt, wobei die Zugeinrichtungen konfiguriert sind, um das untere Ende (83) an dem zweiten Hüllenelement (52) zu befestigen.

6. Hülle nach einem der vorherigen Ansprüche, umfassend ein drittes Hüllenelement (54), das konfiguriert ist, um zwischen einer Rückenlehne (25) des Sitzes (10) und dem Rücken des Benutzers eingefügt zu sein, wenn der Benutzer auf dem Sitz (10) sitzt, das dritte Hüllenelement (54) umfassend mindestens ein erstes Kissen (110), das bereitgestellt ist, um eine Lendenwirbelstütze für den Benutzer zu bilden.

7. Hülle nach dem vorherigen Anspruch, umfassend ein zweites Kissen (115), das bereitgestellt ist, um eine Lendenwirbelstütze für den Benutzer zu bilden, wobei das zweite Kissen (115) zwischen einer ersten Position, in der das zweite Kissen (115) zwischen der Rückenlehne (25) und dem Rücken des Benutzers eingefügt zu sein, wobei das erste Kissen (110) und das zweite Kissen (115) in einer vertikalen Richtung übereinander angeordnet sind, und einer zweiten Position, in der das zweite Kissen (115) zwischen dem ersten Kissen (110) und dem Rücken des Benutzers eingefügt ist, bewegbar zu sein.

8. Hülle nach einem der vorherigen Ansprüche, wobei der Schirm (50) zwischen zwei und zehn Felder (80A, 80B, 80C), vorzugsweise zwischen vier und sechs Felder (80A, 80B, 80C), umfasst.

9. Sitz (10), insbesondere Fahrzeugsitz, umfassend eine Hülle (15) nach einem der vorherigen Ansprüche.

10. Fahrzeug, insbesondere ein Fahrzeug für den öffentlichen Verkehr, umfassend einen Sitz (10) nach dem vorherigen Anspruch.

## Claims

1. A cover (15) for covering a seat (10), in particular a seat of a public transport vehicle, in such a way as it cannot be removed, with at least a first cover element (45) and a foldable screen (50), wherein the first cover element (45) has a support surface (75) provided for a user to rest his head against the support surface (75) when the user is sitting on the seat (10), **characterised in that** the screen (50) comprises a set of panels (80A, 80B, 80C) and presents an
unfolded configuration and a
folded configuration, the panels (80A, 80B, 80C) being stacked against each other along a stacking direction (T; L) when the screen (50) is in the folded configuration, the screen (50) extending towards the front of the seat (10) from a transverse end of the support face (75) when the screen (50) is in the unfolded configuration.

2. A cover according to claim 1, wherein the screen (50) is configured to fan out from the unfolded configuration to the folded configuration.

3. A cover according to claim 1 or 2, wherein the screen (50) has a lower end (83) when the screen (50) is in the unfolded configuration, the cover (15) comprising pulling means configured to exert on the lower end (83) a force tending to pull the lower end (83) downwards.

4. A cover according to claim 1, wherein the pulling means comprises a strap having a first end attached to the lower end (83) and a second end configured to be attached to an armrest (30) of the seat (10).

5. A cover according to claim 3, comprising a second cover member (52) configured to be interposed between a backrest (25) of the seat (10) and the back of the user when the user is seated on the seat (10), the pulling means being configured to secure the lower end (83) to the second cover member (52).

6. A cover according to any of the preceding claims, comprising a third cover element (54) configured to be interposed between a seat (10) back (25) when the user is sitting on the seat (10), the third cover element (54) comprising at least a first cushion (110) provided to form a lumbar support for the user.

7. A cover according to the preceding claim, comprising a second cushion (115) provided to form a lumbar support for the user, the second cushion (115) being movable between a first position in which the second cushion (115) is interposed between the backrest (25) and the user's back, the first cushion (110) and the second cushion (115) being superposed in a vertical direction, and a second position in which the second cushion (115) is interposed between the first cushion (110) and the user's back.

8. A cover according to any of the preceding claims, wherein the screen (50) comprises between two and ten panels (80A, 80B, 80C), preferably between four and six panels (80A, 80B, 80C).

9. Seat (10), in particular a vehicle seat, comprising a cover (15) according to any of the preceding claims.

10. Vehicle, in particular public transport vehicle, comprising a seat (10) according to the preceding claim.
